# EUROPÄISCHE PATENTSCHRIFT

(11) **EP 3 719 354 B1**
(45) Veröffentlichungstag und Bekanntmachung des Hinweises auf die Patenterteilung: **26.10.2022**
(21) Anmeldenummer: 20167455.3
(22) Anmeldetag: 01.04.2020
(51) Int. Cl.: F16H 61/00, F16H 61/02, F16H 61/30

(54) **VERFAHREN ZUR DRUCKSTEUERUNG EINER ELEKTROPNEUMATISCHEN SCHALTVORRICHTUNG**
METHOD FOR CONTROLLING THE PRESSURE OF AN ELECTROPNEUMATIC SWITCHING DEVICE
PROCÉDÉ DE COMMANDE DE LA PRESSION D'UN DISPOSITIF DE COMMUTATION ÉLECTROPNEUMATIQUE

(30) Priorität: 04.04.2019 DE 102019108842
(43) Veröffentlichungstag der Anmeldung: 07.10.2020
(73) Patentinhaber: ZF CV Systems Europe BV, 1170 Brussels (BE)
(72) Erfinder: KARSTENS, Hauke, 24111 Kiel (DE); DIDWISZUS, Lars, 31157 Sarstedt (DE); KNOLL, Henning, 30657 Hannover (DE)
(74) Vertreter: Rabe, Dirk-Heinrich

(56) Entgegenhaltungen:
- DE-A1-102006 031 382
- DE-A1-102006 054 032
- DE-A1-102009 045 090
- DE-A1-102011 007 107

## Beschreibung

Die Erfindung betrifft ein Verfahren zur Drucksteuerung einer elektropneumatischen Schaltvorrichtung für ein automatisiertes Schaltgetriebe mit pneumatischen Wähl- und/oder Schaltzylindern, mit einem pneumatischen Kupplungszylinder einer zwischen der Triebwelle eines Antriebsmotors und einer Eingangswelle des Schaltgetriebes angeordneten Reibungskupplung, und mit einem pneumatischen Bremszylinder einer auf die Eingangswelle des Schaltgetriebes wirksamen Getriebebremse, wobei der Kupplungszylinder und der Bremszylinder über jeweils eine Ventilanordnung wechselweise mit einer druckführenden Hauptanschlussleitung oder einer drucklosen Entlüftungsleitung verbindbar sind, und wobei die Ventilanordnung mindestens ein als 2/2-Wege-Magnetventil ausgebildetes Einlassventil und ein als 2/2-Wege-Magnetventil ausgebildetes Auslassventil umfasst Ein solches Verfahren ist aus der DE10 2011 007 107 A1 bekannt.

Bei größeren Nutzfahrzeugen, die zur Versorgung einer Druckluftbremsanlage und gegebenenfalls einer Luftfederungsanlage ohnehin über eine Druckluftversorgungseinrichtung verfügen, sind das automatisierte Schaltgetriebe, die zugeordnete Reibungskupplung und die Getriebebremse häufig mittels einer elektropneumatischen Schaltvorrichtung betätigbar. Die Wähl- und Schaltvorgänge in dem Schaltgetriebe selbst erfolgen dann über doppeltwirksame pneumatische Wähl- und Schaltzylinder, deren Druckräume jeweils mittels mindestens ein zugeordnetes Magnetventil, das zum Beispiel als ein 3/2-Wege-Magnetschaltventil ausgebildet sein kann, wechselweise mit einer druckführenden Hauptanschlussleitung oder einer drucklosen Entlüftungsleitung verbindbar sind. Entsprechende elektropneumatische Schaltvorrichtungen automatisierter Schaltgetriebe sind beispielsweise aus der DE 199 31 973 A1 und der DE 10 2006 040 476 A1 bekannt.

Die zwischen der Triebwelle des Antriebsmotors und der Eingangswelle des Schaltgetriebes angeordnete, als Anfahr- und Schaltkupplung wirksame Reibungskupplung ist meistens passiv schließbar ausgebildet. Die Reibungskupplung wird in diesem Fall durch mindestens eine Anpressfeder geschlossen gehalten und ist mittels einer Belüftung eines zugeordneten pneumatischen Kupplungszylinders ausrückbar. Die Belüftung und Entlüftung des Kupplungszylinders erfolgt mittels einer Ventilanordnung, die entweder ein als 2/2-Wege-Magnetventil ausgebildetes Einlassventil und ein als 2/2-Wege-Magnetventil ausgebildetes Auslassventil oder zwei parallel geschaltete, als 2/2-Wege-Magnetventile ausgebildete Einlassventile und zwei parallel geschaltete, als 2/2-Wege-Magnetventile ausgebildete Auslassventile umfassen kann.

Bei einer Ventilanordnung einer pneumatisch aus- und einrückbaren Reibungskupplung mit einem einzigen Einlassventil und einem einzigen Auslassventil, die beispielsweise in der Schaltvorrichtung gemäß der DE 199 31 973 A1 enthalten ist, wird der Kupplungszylinder durch das Öffnen des Einlassventils, das im unbestromten Zustand geschlossen ist, aus der druckführenden Hauptanschlussleitung belüftet und die Reibungskupplung dadurch geöffnet. Durch das Öffnen des Auslassventils, das im unbestromten Zustand ebenfalls geschlossen ist, wird der Ausrückzylinder in die drucklose Entlüftungsleitung entlüftet und die Reibungskupplung dadurch wieder geschlossen.

Bei einer Ventilanordnung einer pneumatisch aus- und einrückbaren Reibungskupplung mit zwei parallel geschalteten Einlassventilen und zwei parallel geschalteten Auslassventilen, die in der DE 10 2009 045 090 A1 beschrieben ist, wird der Kupplungszylinder durch das Öffnen mindestens eines der zwei Einlassventile, die im unbestromten Zustand geschlossen sind, aus der Hauptanschlussleitung belüftet und die Reibungskupplung dadurch geöffnet beziehungsweise ausgerückt. Durch das Öffnen mindestens eines der zwei Auslassventile, die im unbestromten Zustand ebenfalls geschlossen sind, wird der Ausrückzylinder in die Entlüftungsleitung entlüftet und die Reibungskupplung dadurch wieder geschlossen beziehungsweise eingerückt. Durch das Öffnen jeweils eines der beiden Einlass- oder Auslassventile oder beider Einlass- oder Auslassventile, die zudem jeweils unterschiedliche Strömungsquerschnitte aufweisen können, sind unterschiedliche Ausrück- und Einrückgeschwindigkeiten der Reibungskupplung einstellbar.

Bei größeren Nutzfahrzeugen sind die Schaltgetriebe meistens unsynchronisiert ausgeführt, wobei die betreffenden Gangschaltkupplungen als unsynchronisierte Klauenkupplungen ausgebildet sind. Zur Synchronisierung der Gangschaltkupplungen bei Hochschaltungen sind derartige Schaltgetriebe mit einer Getriebebremse versehen, die bremsend auf eine Eingangswelle des Getriebes einwirken kann. Die Getriebebremse kann unmittelbar auf die Eingangswelle oder auf eine Vorgelegewelle bremsend einwirken, wobei letztere über eine Eingangskonstante mit der Eingangswelle in Triebverbindung steht. Eine entsprechende pneumatisch betätigbare Getriebebremse ist zum Bespiel aus der DE 10 2016 225 075 A1 bekannt. Die zugeordnete Ventilanordnung weist neben einem als 2/2-Wege-Magnetventil ausgebildeten Einlassventil, über das der Bremszylinder der Getriebebremse im bestromten Zustand mit der druckführenden Hauptanschlussleitung verbunden ist, und einem als 2/2-Wege-Magnetventil ausgebildeten Auslassventil, über das der Bremszylinder im unbestromten Zustand mit der drucklosen Entlüftungsleitung verbunden ist, zusätzlich ein Schnellentlüftungsventil auf.

Bei einigen mit einer Druckluftversorgungseinrichtung ausgerüsteten Nutzfahrzeugen sind die druckabgesenkten Nebenverbraucherkreise, zu denen auch eine elektropneumatische Schaltvorrichtung eines automatisierten Schaltgetriebes zählt, nicht über ein Kreisschutzventil eines Mehrkreisschutzventils sondern nur über ein Druckregelventil an die Druckluftversorgungseinrichtung angeschlossen. Dies führt bei einer Fehlfunktion des betreffenden Druckregelventils dazu, dass die Nebenverbraucherkreise anstelle mit dem abgesenkten Versorgungsdruck von beispielsweise maximal 8,5 × 10⁵ Pa mit einem höheren Systemdruck von beispielsweise maximal 12,5 × 10⁵ Pa beaufschlagt werden. In den Wähl- und Schaltzylindern des automatisierten Schaltgetriebes und den betreffenden Schaltkupplungen führt der erhöhte Versorgungsdruck zu höheren Schaltkräften und höheren Schaltgeschwindigkeiten, die mit einer größeren mechanischen Belastung sowie einem vorzeitigen Verschleiß der betreffenden Bauteile verbunden sind. Zur Vermeidung dieser Nachteile könnte in der Hauptanschlussleitung der Schaltvorrichtung ein zusätzliche Druckregelventil oder ein bei Überdruck öffnendes Druckbegrenzungsventil angeordnet werden, oder die Wähl- und Schaltzylinder der Schaltvorrichtung sowie die Schaltkupplungen des Schaltgetriebes könnten auf den erhöhten Versorgungsdruck ausgelegt sein. Dies wäre jedoch mit einem erhöhten apparativen Aufwand für die Schaltvorrichtung oder mit höheren Herstellungskosten für das Schaltgetriebe verbunden.

Daher lag der Erfindung die Aufgabe zugrunde, ein Verfahren zur Drucksteuerung einer elektropneumatischen Schaltvorrichtung für ein automatisiertes Schaltgetriebe der eingangs genannten Bauart anzugeben, mit dem der Versorgungsdruck ohne zusätzlichen apparativen Aufwand auf einen vorgesehenen Maximaldruck begrenzt werden kann.

Diese Aufgabe ist durch ein Verfahren gelöst, welches die Merkmale des Anspruchs 1 aufweist. Vorteilhafte Ausgestaltungen und Weiterbildungen des erfindungsgemäßen Steuerungsverfahrens sind Gegenstand des Unteranspruchs.

Die Erfindung betrifft demnach ein Verfahren zur Drucksteuerung einer elektropneumatischen Schaltvorrichtung für ein automatisiertes Schaltgetriebe mit pneumatischen Wähl- und/oder Schaltzylindern, mit einem pneumatischen Kupplungszylinder einer zwischen der Triebwelle eines Antriebsmotors und einer Eingangswelle des Schaltgetriebes angeordneten Reibungskupplung, und mit einem pneumatischen Bremszylinder einer auf die Eingangswelle des Schaltgetriebes wirksamen Getriebebremse, wobei der Kupplungszylinder und der Bremszylinder über jeweils eine Ventilanordnung wechselweise mit einer druckführenden Hauptanschlussleitung oder einer drucklosen Entlüftungsleitung verbindbar sind, und wobei die Ventilanordnung mindestens ein als 2/2-Wege-Magnetventil ausgebildetes Einlassventil und ein als 2/2-Wege-Magnetventil ausgebildetes Auslassventil umfasst.

Zur Lösung der gestellten Aufgabe ist verfahrensgemäß vorgesehen, dass der in der Hauptanschlussleitung anliegende Versorgungsdruck mittels eines dort angeschlossenen Drucksensors oder über in einem Datenbus abrufbare Betriebsparameter ermittelt sowie mit einem vorgegebenen Maximaldruck verglichen wird, und dass dann, wenn der Versorgungsdruck den Maximaldruck übersteigt, der Versorgungsdruck durch das Ablassen von Druckluft über die Ventilanordnung des Bremszylinders oder des Kupplungszylinders abgesenkt und auf den Maximaldruck oder auf einen um eine vorab festgelegte Druckdifferenz unter dem Maximaldruck liegenden Soll-Versorgungsdruck eingestellt oder eingeregelt wird.

Durch die Überwachung des in der Hauptanschlussleitung anliegenden Versorgungsdruckes und die bedarfsweise Druckabsenkung durch das Ablassen von Druckluft über die Ventilanordnung des Bremszylinders oder des Kupplungszylinders wird auf überraschend einfache Weise und ohne einen zusätzlichen apparativen Aufwand eine mechanische Überlastung der Wähl- und Schaltzylinder sowie der Schaltkupplungen des Schaltgetriebes vermieden.

Dabei hat die Absenkung des Versorgungsdrucks auf einen um eine festgelegte Druckdifferenz unter dem Maximaldruck liegenden Soll-Versorgungsdruck den Vorteil, dass der Versorgungsdruck den Maximaldruck auch bei einer schaltungsbedingten Unterbrechung des Ablassvorgangs nicht oder vorzugsweise nur geringfügig überschreiten wird. Als geeignete Druckdifferenz zum Maximaldruck wird beispielsweise ein Wert zwischen 0,5 × 10⁵ Pa und 1,0 × 10⁵ Pa einschließlich der Bereichsgrenzen angesehen. Das Verfahren zur bedarfsweisen Druckabsenkung kann während des Betriebs der Schaltvorrichtung permanent durchgeführt und nur während Schaltvorgängen unterbrochen werden, bei denen die betreffende Ventilanordnung zur Betätigung der Getriebebremse oder der Reibungskupplung vorgesehen ist. Diese Verfahrensvariante ist jedoch mit einem relativ großen Druckluftverlust verbunden, der durch einen häufigeren oder längeren Betrieb eines Kompressors der Druckluftversorgungseinrichtung ausgeglichen werden muss.

Erfindungsgemäß erfolgt die bedarfsweise Druckabsenkung unmittelbar vor und während Schaltvorgängen mittels derjenigen Ventilanordnung, die während des jeweiligen Schaltvorgangs nicht zur Betätigung der Getriebebremse vorgesehen ist. Bei dieser Verfahrensvariante ist der Druckluftverlust deutlich geringer, da die Zeiträume der Druckabsenkungen auf die Schaltvorgänge beschränkt sind.

Abhängig von der Ausbildung der Ventile der zur Druckabsenkung verwendeten Ventilanordnung sind unterschiedliche Verfahren sinnvoll, um während der Druckabsenkung eine ungewollte Betätigung der Getriebebremse oder ein ungewolltes Öffnen der Reibungskupplung zu vermeiden. Im Prinzip könnte dies jeweils dadurch erreicht werden, dass der geöffnete Strömungsquerschnitt zur Entlüftungsleitung größer ist als der geöffnete Strömungsquerschnitt zur Hauptanschlussleitung, so dass sich in dem Druckraum des Bremszylinders oder des Kupplungszylinders kein erhöhter Druck einstellen kann. Üblicherweise ist aber beispielsweise aus bauraumabhängigen Gründen der Strömungsquerschnitt der Entlüftungsleitung nicht größer als der Strömungsquerschnitt der Hauptanschlussleitung.

Bei der erfindungsgemäßen Ausführung der betreffenden Ventilanordnung mit nur einem Einlassventil und nur einem Auslassventil, die als Taktventile ausgebildet sind und gleiche Nennweiten aufweisen, ist hierzu vorgesehen, dass zur Druckabsenkung das Auslassventil mit einer größeren Pulsweite geöffnet wird als das Einlassventil.

Bei einer nicht erfindungsgemäßen Ausführung der betreffenden Ventilanordnung mit zwei Einlassventilen und zwei Auslassventilen, die als 2/2-Wege-Magnetschaltventile ausgebildet sind und jeweils gleiche Nennweiten aufweisen, ist hierzu vorgesehen, dass zur Druckabsenkung ein Einlassventil und beide Auslassventile geöffnet werden.

Bei einer nicht erfindungsgemäßen Ausführung der betreffenden Ventilanordnung mit zwei Einlassventilen und zwei Auslassventilen, die als 2/2-Wege-Magnetschaltventile ausgebildet sind und jeweils unterschiedliche Nennweiten aufweisen, ist hierzu vorgesehen, dass zur Druckabsenkung das Einlassventil mit der kleineren Nennweite und das Auslassventil mit der größeren Nennweite oder beide Auslassventile geöffnet werden.

Bei einer nicht erfindungsgemäßen Ausführung der betreffenden Ventilanordnung mit zwei Ein-/Auslassventilen, die als 3/2-Wege-Magnetschaltventile ausgebildet sind, welche im unbestromten Zustand den Druckraum des zugeordneten Bremszylinders oder Kupplungszylinders mit der Entlüftungsleitung verbinden, und die unterschiedliche Nennweiten aufweisen, ist hierzu vorgesehen, dass zur Druckabsenkung das Ein-/Auslassventil mit der kleineren Nennweite umgeschaltet wird, und das Ein-/Auslassventil mit der größeren Nennweite in seiner Ruhestellung verbleibt, also nicht umgeschaltet wird.

Gemäß einer davon abweichenden nicht erfindungsgemäßen alternativen Verfahrensweise kann vorgesehen sein, dass bei einer Ausführung der betreffenden Ventilanordnung mit zwei als 3/2-Wege-Magnetschaltventile ausgebildeten Ein-/ Auslassventilen, welche im unbestromten Zustand den Druckraum des zugeordneten Bremszylinders oder Kupplungszylinders mit der Entlüftungsleitung verbinden und die gleichen Nennweiten aufweisen, zur Druckabsenkung das eine Ein-/Auslassventil umgeschaltet wird und das andere Ein-/Auslassventil in seiner Ruhestellung verbleibt.

Ebenso kann alternativ dazu vorgesehen sein, dass bei einer nicht erfindungsgemäßen Ausführung der betreffenden Ventilanordnung mit zwei Ein-/ Auslassventilen, die als 3/2-Wege-Magnetschaltventile ausgebildet sind, welche im unbestromten Zustand den Druckraum des zugeordneten Bremszylinders oder Kupplungszylinders mit der Entlüftungsleitung verbinden und die gleichen Nennweiten aufweisen, zur Druckabsenkung das eine Ein-/Auslassventil getaktet umgeschaltet wird und das andere Ein-/Auslassventil in seiner Ruhestellung verbleibt. Durch die getaktete Umschaltung des einen Ein-/Auslassventils wird der durch dieses Ein-/ Auslassventil pro Zeiteinheit leitbare Volumenstrom reduziert.

Die beiden zuletzt genannten Verfahrensweisen führen außerdem zu dem Vorteil, dass kostensparend identische 3/2-Wege-Magnetschaltventile mit gleichen Nennweiten genutzt werden können.

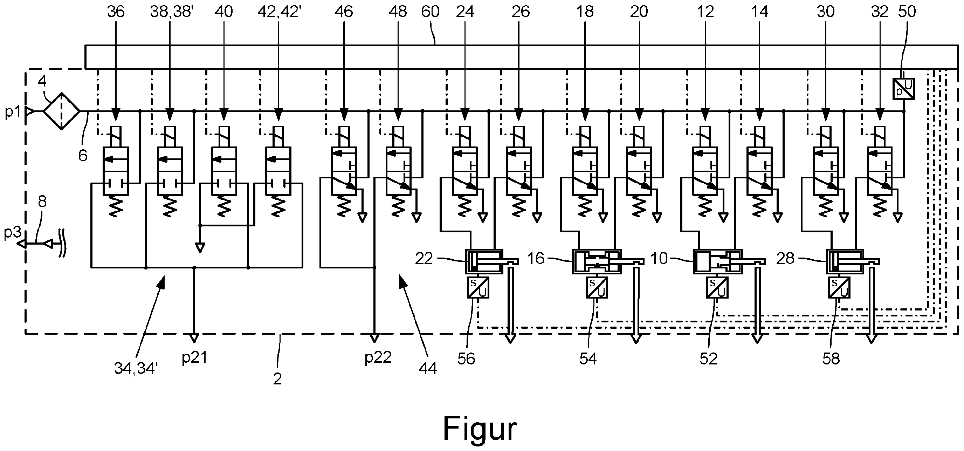

Die Erfindung wird nachstehend anhand eines in der beigefügten Zeichnung dargestellten Ausführungsbeispiels näher erläutert. In der Zeichnung zeigt die einzige Figur eine elektropneumatische Schaltvorrichtung für ein automatisiertes Gruppengetriebe in einer schematischen Darstellung.

Das erfindungsgemäße Verfahren zur Drucksteuerung einer elektropneumatischen Schaltvorrichtung 2 für ein automatisiertes Schaltgetriebe wird nachfolgend beispielhaft anhand eines Gruppengetriebes beschrieben, das ein mehrstufiges Hauptgetriebe, eine diesem vorgeschaltete zweistufige Splitgruppe und eine dem Hauptgetriebe nachgeordnete zweistufige Bereichsgruppe aufweist. Das Gruppengetriebe weist zudem eine zwischen der Triebwelle eines Antriebsmotors und einer Eingangswelle des Gruppengetriebes angeordnete Reibungskupplung sowie eine auf die Eingangswelle des Gruppengetriebes wirksame Getriebebremse auf.

Die Schaltvorrichtung 2 weist einen Versorgungseingang p1 auf, der extern in nicht abgebildeter Weise über ein Druckregelventil an eine Druckluftversorgungseinrichtung angeschlossen ist. Intern ist eine druckführende Hauptanschlussleitung 6 über einen Luftfilter 4 an den Versorgungseingang p1 angeschlossen. Zudem weist die Schaltvorrichtung 2 einen Entlüftungsausgang p3 auf, an den intern eine drucklose Entlüftungsleitung 8 angeschlossen ist.

Zur Wähl- und Schaltbetätigung des Hauptgetriebes sind ein als doppeltwirksamer Stellzylinder ausgebildeter Wählzylinder 10 und ein als doppeltwirksamer Stellzylinder ausgebildeter Schaltzylinder 16 vorgesehen. Die Druckräume der Wähl- und Schaltzylinder 10, 16 sind über jeweils ein als ein 3/2-Wege-Magnetventil ausgebildetes Ein-/Auslassventil 12, 14; 18, 20 wechselweise mit der Hauptanschlussleitung 6 oder der Entlüftungsleitung 8 verbindbar. Im unbestromten Zustand der Ein-/Auslassventile 12, 14; 18, 20 sind die Druckräume der Wähl- und Schaltzylinder 10, 16 jeweils mit der Entlüftungsleitung 8 verbunden und somit drucklos.

Zur Schaltbetätigung der Splitgruppe ist ein als doppeltwirksamer Stellzylinder ausgebildeter Schaltzylinder 22 vorgesehen. Die Druckräume des Schaltzylinders 22 sind über jeweils ein als ein 3/2-Wege-Magnetventil ausgebildetes Ein-/Auslassventil 24, 26 wechselweise mit der Hauptanschlussleitung 6 oder der Entlüftungsleitung 8 verbindbar. Im unbestromten Zustand der Ein-/Auslassventile 24, 26 sind die Druckräume des Schaltzylinders 22 jeweils mit der Entlüftungsleitung 8 verbunden und somit drucklos. Zur Schaltbetätigung der Bereichsgruppe ist ein als doppeltwirksamer Stellzylinder ausgebildeter Schaltzylinder 28 vorgesehen. Die Druckräume des Schaltzylinders 28 sind über jeweils ein als ein 3/2-Wege-Magnetventil ausgebildetes Ein-/Auslassventil 30, 32 wechselweise mit der Hauptanschlussleitung 6 oder der Entlüftungsleitung 8 verbindbar. Im unbestromten Zustand der Ein-/Auslassventile 30, 32 sind die Druckräume des Schaltzylinders 28 jeweils mit der Entlüftungsleitung 8 verbunden und somit drucklos.

Die Wähl- und Schaltzylinder 10, 16, 22, 28 dieses Gruppengetriebes sind vorliegend zu der Schaltvorrichtung 2 gehörend abgebildet, sie können jedoch auch, wie der Kupplungszylinder der Reibungskupplung und der Bremszylinder der Getriebebremse, dem Gruppengetriebe zugeordnet sein.

Zur Betätigung, also dem Aus- und Einrücken der Reibungskupplung ist eine Ventilanordnung 34, 34' vorhanden, die zwei parallel geschaltete, als 2/2-Wege-Magnetventile ausgebildete Einlassventile 36, 38, 38' und zwei parallel geschaltete, als 2/2-Wege-Magnetventile ausgebildete Auslassventile 40, 42, 42' umfasst. Über die im unbestromten Zustand geschlossenen Einlassventile 36, 38, 38' ist ein an den Arbeitsanschluss p21 angeschlossener Druckraum eines nicht abgebildeten Kupplungszylinders der Reibungskupplung mit der Hauptanschlussleitung 6 verbindbar, wodurch die Reibungskupplung ausgerückt beziehungsweise geöffnet werden kann. Über die im unbestromten Zustand geschlossenen Auslassventile 40, 42, 42' ist der Druckraum des Kupplungszylinders mit der Entlüftungsleitung 8 verbindbar, wodurch die Reibungskupplung eingerückt beziehungsweise geschlossen werden kann.

Die Einlassventile 36, 38 und die Auslassventile 40, 42 können identische Nennweiten und somit identische Strömungsquerschnitte oder unterschiedliche Nennweiten und somit unterschiedlich große Strömungsquerschnitte aufweisen. In der erfindungsgemäßen Ausführungsform der Ventilanordnung 34 mit identischen Nennweiten können die Ein- und Auslassventile 36, 38, 40, 42 beispielsweise eine Nennweite von 3,5 mm aufweisen. In einer zweiten nicht erfindungsgemäßen Ausführungsform der Ventilanordnung 34' mit unterschiedlichen Nennweiten kann zum Beispiel vorgesehen sein, dass das erste Einlassventil 36 und das erste Auslassventil 40 jeweils eine Nennweite von 3,5 mm und das zweite Einlassventil 38' und das zweite Auslassventil 42' jeweils eine Nennweite von 4,5 mm aufweisen.

Zur Betätigung der Getriebebremse ist eine Ventilanordnung 44 vorgesehen, die zwei parallel geschaltete, als 3/2-Wege-Magnetventile ausgebildete Ein-/Auslassventile 46, 48 umfasst. Über diese Ein-/Auslassventile 46, 48 ist ein an den Arbeitsanschluss p22 angeschlossener Druckraum eines nicht abgebildeten Bremszylinders der Getriebebremse wechselweise mit der Hauptanschlussleitung 6 oder der Entlüftungsleitung 8 verbindbar, wodurch die Getriebebremse betätigt oder gelöst werden kann. Im unbestromten Zustand der Ein-Auslassventile 46, 48 ist der Druckraum des Bremszylinders mit der Entlüftungsleitung 8 verbunden. Im bestromten Zustand der Ein-/Auslassventile 46, 48 ist der Druckraum des Bremszylinders mit der Hauptanschlussleitung 6 verbunden. Die Ein-/Auslassventile 46, 48 weisen bevorzugt unterschiedliche Nennweiten und somit unterschiedlich große Strömungsquerschnitte auf. Beispielsweise kann das erste Ein-/Auslassventil 46 eine Nennweite von 3,5 mm und das zweite Ein-/Auslassventil 48 eine Nennweite von 4,5 mm aufweisen.

An die Hauptanschlussleitung 6 ist ein Drucksensor 50 angeschlossen, mit dem der in der Hauptanschlussleitung 6 anliegende Versorgungsdruck p_{V_ist} erfasst werden kann. Den Wähl- und Schaltzylindern 10, 12, 22, 28 ist jeweils ein Wegsensor 52, 54, 56, 58 zugeordnet, mit denen die jeweilige Wählposition beziehungsweise Schaltposition ermittelt werden kann. Die genannten Sensoren 50, 52, 54, 56, 58 sind über Sensorleitungen mit einer elektronischen Steuereinheit 60 verbunden. Ebenso sind die genannten Magnetventile 12, 14, 18, 20; 24, 26; 30, 32; 36, 38, 38', 40, 42,42'; 46, 48 über Steuerleitungen mit der elektronischen Steuereinheit 60 verbunden.

Da der an sich auf einen maximalen Versorgungsdruck p_{V_max} von 8,5 × 10⁵ Pa begrenzte Versorgungsdruck p_{V} der Schaltvorrichtung 2 kann bei einer Fehlfunktion des Druckregelventils, über das die Hauptanschlussleitung 6 an die Druckluftversorgungseinrichtung angeschlossen ist, auf den Systemdruck von maximal 12,5 × 10⁵ Pa ansteigen, welches zu erhöhten Stellkräften und Stellgeschwindigkeiten in den Wähl- und Schaltzylindern 10, 16, 22, 28 der Schaltvorrichtung 2 sowie einer entsprechend erhöhten Belastung der zugeordneten Schaltkupplungen des Gruppengetriebes führt.

Um den Versorgungsdruck p_{V} der Schaltvorrichtung 2 ohne zusätzlichen apparativen Aufwand auf den vorgesehenen Maximaldruck p_{V_max} zu begrenzen, sieht das erfindungsgemäße Steuerungsverfahren vor, dass der in der Hauptanschlussleitung 6 anliegende Versorgungsdruck p_{V_ist} mittels des angeschlossenen Drucksensors 50 gemessen und mit dem zuvor definierten Maximaldruck p_{V_max} verglichen wird, und dass dann, wenn der Versorgungsdruck p_{V_ist} den Maximaldruck p_{V_max} übersteigt (p_{V_ist} > p_{V_max}), der Versorgungsdruck p_{V_ist} durch das Ablassen von Druckluft über die Ventilanordnung 34, 34', 44 des Bremszylinders oder des Kupplungszylinders abgesenkt und auf den Maximaldruck p_{V_max} oder auf einen um eine vorab festgelegte Druckdifferenz Δp_{V} von beispielsweise 0,5 × 10⁵ Pa bis 1,0 × 10⁵ Pa unter dem Maximaldruck p_{V_max} liegenden Soll-Versorgungsdruck p_{V_soll} eingestellt oder eingeregelt wird (p_{V_soll} = p_{V_max}; p_{V_soll} = p_{V_max} - Δp_{V}).

Die bedarfsweise Druckabsenkung kann während des Betriebs der Schaltvorrichtung 2 permanent durchgeführt und nur während Schaltvorgängen unterbrochen werden, bei denen die betreffende Ventilanordnung 34, 34', 44 zur Betätigung der Getriebebremse oder der Reibungskupplung vorgesehen ist. Erfindungsgemäß erfolgt die bedarfsweise Druckabsenkung unmittelbar vor und während Schaltvorgängen mittels derjenigen Ventilanordnung 34, 34', 44, die während des jeweiligen Schaltvorgangs nicht zur Betätigung der Getriebebremse genutzt ist.

Wenn die Druckabsenkung über die Ventilanordnung 34 des Kupplungszylinders erfolgt, und diese Ventilanordnung 34 gemäß einer nicht erfindungsgemäßen Ausführungsvariante zwei Einlassventile 36, 38 und zwei Auslassventile 40, 42 mit jeweils gleichen Nennweiten aufweist, ist zur Vermeidung eines unabsichtlichen Ausrückens der Reibungskupplung vorgesehen, dass zur Druckabsenkung ein Einlassventil (36 oder 38) und beide Auslassventile 40, 42 geöffnet werden.

Sofern die Druckabsenkung über die Ventilanordnung 34' des Kupplungszylinders erfolgt, und diese Ventilanordnung 34' gemäß der zweiten nicht erfindungsgemäßen Ausführungsvariante zwei Einlassventile 36, 38' sowie zwei Auslassventile 40, 42' mit jeweils unterschiedlichen Nennweiten aufweist, so ist zur Vermeidung eines unabsichtlichen Ausrückens der Reibungskupplung vorgesehen, dass zur Druckabsenkung das erste Einlassventil 36 mit der kleineren Nennweite und das zweite Auslassventil 42' mit der größeren Nennweite oder beide Auslassventile 40, 42' geöffnet werden.

Wenn die Druckabsenkung über die Ventilanordnung 44 des Bremszylinders erfolgt, und diese Ventilanordnung 44, wie es hier nicht erfindungsgemäß vorgesehen ist, zwei Ein-/Auslassventile 46, 48 mit unterschiedlichen Nennweiten umfasst, so ist zur Vermeidung einer unabsichtlichen Betätigung der Getriebebremse vorgesehen, dass zur Druckabsenkung das erste Ein-/Auslassventil 46 mit der kleineren Nennweite umgeschaltet wird, und das zweite Ein-/Auslassventil 48 mit der größeren Nennweite in seiner Ruhestellung verbleibt, also nicht umgeschaltet wird.

### Bezugszeichenliste (Bestandteil der Beschreibung)

- 2: Schaltvorrichtung
- 4: Luftfilter
- 6: Hauptanschlussleitung
- 8: Entlüftungsleitung
- 10: Wählzylinder
- 12: Erstes Ein-/Auslassventil für den Wählzylinder 10
- 14: Zweites Ein-/Auslassventil für den Wählzylinder 10
- 16: Erster Schaltzylinder
- 18: Erstes Ein-/Auslassventil für den Schaltzylinder 16
- 20: Zweites Ein-/Auslassventil für den Schaltzylinder 16
- 22: Zweiter Schaltzylinder
- 24: Erstes Ein-/Auslassventil für den zweiten Schaltzylinder 22
- 26: Zweites Ein-/Auslassventil für den zweiten Schaltzylinder 22
- 28: Dritte Schaltzylinder
- 30: Erstes Ein-/Auslassventil für den dritten Schaltzylinder 28
- 32: Zweites Ein-/Auslassventil für den dritten Schaltzylinder 28
- 34, 34': Ventilanordnung für eine Kupplung
- 36: Erstes Einlassventil der Ventilanordnung 34, 34'
- 38, 38': Zweites Einlassventil der Ventilanordnung 34, 34'
- 40: Erstes Auslassventil der Ventilanordnung 34, 34'
- 42, 42': Zweites Auslassventil der Ventilanordnung 34, 34'
- 44: Ventilanordnung für einen Bremszylinder
- 46: Erstes Ein-/Auslassventil der Ventilanordnung 44
- 48: Zweites Ein-/Auslassventil der Ventilanordnung 44
- 50: Drucksensor
- 52: Erster Wegsensor
- 54: Zweiter Wegsensor
- 56: Dritter Wegsensor
- 58: Vierter Wegsensor
- p1: Versorgungseingang
- p3: Entlüftungsausgang
- p21: Arbeitsanschluss für den Kupplungszylinder einer Reibungskupplung
- p22: Arbeitsanschluss für einen Bremszylinder einer Getriebebremse
- pv: Versorgungsdruck
- p_{V_ist}: Versorgungsdruck, Ist-Versorgungsdruck
- p_{V_max}: Maximaldruck
- P_{V_soll}: Soll-Versorgungsdruck
- Δp_{V}: Druckdifferenz

## Patentansprüche

1. Verfahren zur Drucksteuerung einer elektropneumatischen Schaltvorrichtung für ein automatisiertes Schaltgetriebe mit pneumatischen Wähl- und/oder Schaltzylindern (10, 16, 22, 28), mit einem pneumatischen Kupplungszylinder einer zwischen der Triebwelle eines Antriebsmotors und einer Eingangswelle des Schaltgetriebes angeordneten Reibungskupplung, und mit einem pneumatischen Bremszylinder einer auf die Eingangswelle des Schaltgetriebes wirksamen Getriebebremse, wobei der Kupplungszylinder und der Bremszylinder über jeweils eine Ventilanordnung (34, 34', 44) wechselweise mit einer druckführenden Hauptanschlussleitung (6) oder einer drucklosen Entlüftungsleitung (8) verbindbar sind, und wobei die Ventilanordnung (34, 34', 44) mindestens ein als 2/2-Wege-Magnetventil ausgebildetes Einlassventil (36, 38) und ein als 2/2-Wege-Magnetventil ausgebildetes Auslassventil (40, 42) umfasst, wobei der in der Hauptanschlussleitung (6) anliegende Versorgungsdruck (p_{V_ist}) mittels eines dort angeschlossenen Drucksensors (50) oder über in einem Datenbus abrufbare Betriebsparameter ermittelt sowie mit einem vorgegebenen Maximaldruck (p_{V_max}) verglichen wird, wobei dann, wenn der Versorgungsdruck (p_{V_ist}) den Maximaldruck (p_{V_max}) übersteigt (p_{V_ist} > p_{V_max}), der Versorgungsdruck (p_{V_ist}) durch das Ablassen von Druckluft über die Ventilanordnung (34, 34', 44) des Kupplungszylinders abgesenkt und auf den Maximaldruck (p_{V_max}) oder auf einen um eine vorab festgelegte Druckdifferenz (Δp_{V}) unter dem Maximaldruck (p_{V_max}) liegenden Soll-Versorgungsdruck (p_{V_soll}) eingestellt oder eingeregelt wird (p_{V_soll} = p_{V_max}; p_{V_soll} = p_{V_max} - Δp_{V}), dass die bedarfsweise Druckabsenkung unmittelbar vor und während Schaltvorgängen mittels derjenigen Ventilanordnung (34, 34', 44) erfolgt, die während des jeweiligen Schaltvorgangs nicht zur Betätigung der Getriebebremse vorgesehen ist, **dadurch gekennzeichnet, dass** bei einer Ausführung der betreffenden Ventilanordnung (34, 34', 44) mit nur einem Einlassventil (36, 38) und nur einem Auslassventil (40, 42), die als Taktventile ausgebildet sind und gleiche Nennweiten aufweisen, zur Druckabsenkung das Auslassventil (40, 42) mit einer größeren Pulsweite als das Einlassventil (36, 38) geöffnet wird.

2. Verfahren nach Anspruch 1, **dadurch gekennzeichnet, dass** die Druckdifferenz (Δp_{V}) zum Maximaldruck (p_{V_max}) zwischen 0,5 × 10⁵ Pa und 1,0 × 10⁵ Pa beträgt.

## Claims

1. A method for controlling the pressure of an electropneumatic switching device for an automatic transmission having pneumatic selector and/or switching cylinders (10, 16, 22, 28), having a pneumatic clutch cylinder of a friction clutch arranged between the drive shaft of a drive motor and an input shaft of the transmission, and having a pneumatic brake cylinder of a transmission brake acting on the input shaft of the transmission, wherein the clutch cylinder and the brake cylinder can each be alternately connected to a pressure conducting main connecting line (6) or a pressure-less ventilation line (8) via a valve arrangement (34, 34', 44), and wherein the valve arrangement (34, 34', 44) comprises at least one inlet valve (36, 38) formed as a 2/2 way solenoid valve and one outlet valve (40, 42) formed as a 2/2 way solenoid valve, wherein the supply pressure (pv_{_ist}) applied in the main connecting line (6) is determined by means of a pressure sensor (50) connected there or via an operating parameter that can be retrieved in a data bus as well as being compared to a predefined maximum pressure (pv_{_max}), wherein, when the supply pressure (pv_{_ist}) exceeds the maximum pressure (pv_{_max}) (pv_{_ist} > pv_{_max}), the supply pressure (pv_{_ist}) is reduced by the release of compressed air via the valve arrangement (34, 34', 44) of the clutch cylinder and is set or adjusted (pv_{_soll} = pv_{_max}; pv_{_soll} = pv_{_max} - Δpv) to the maximum pressure (pv_{_max}) or to a target supply pressure (pv_{_soll}) lying below the maximum pressure (pv_{_max}) by a pre-determined pressure difference (Δpv), that the optional pressure reduction occurs immediately before and during switching operations by means of the valve arrangement (34, 34', 44), which is not provided for actuating the transmission brake during the respective switching operation, **characterized in that** in one design of the relevant valve arrangement (34, 34', 44) having only one inlet valve (36, 38) and only one outlet valve (40, 42), which are formed as timer valves and have the same nominal widths, the outlet valve (40, 42) is opened with a greater pulse width than the inlet valve (36, 38) for pressure reduction.

2. The method according to claim 1, **characterized in that** the pressure difference (Δpv) to the maximum pressure (pv_{_max}) ranges between 0.5 × 10⁵ Pa and 1.0 × 10⁵ Pa.

## Revendications

1. Procédé de modulation de pression d'un dispositif de commutation électropneumatique pour une boîte de vitesses automatisée avec des cylindres (10, 16, 22, 28) de sélection et/ou de commutation pneumatiques, avec un cylindre d'accouplement pneumatique d'un embrayage monodisque agencé entre l'arbre moteur d'un moteur d'entraînement et un arbre d'entrée de la boîte de vitesses, et avec un cylindre de frein pneumatique d'un frein de transmission qui agit sur l'arbre d'entrée de la boîte de vitesses, dans lequel le cylindre d'accouplement et le cylindre de frein peuvent être respectivement reliés via un agencement de valves (34, 34', 44) alternativement avec une conduite de raccordement principale (6) qui guide la pression ou une conduite de purge (8) sans pression, et dans lequel l'agencement de valves (34, 34', 44) comprend au moins une valve d'admission (36, 38) conçue en tant qu'électrovalve à 2/2 voies et une valve d'évacuation (40, 42) conçue en tant qu'électrovalve à 2/2 voies, dans lequel la pression d'alimentation (p_{V_ist}) qui s'applique dans la conduite de raccordement principale (6) est établie au moyen d'un capteur de pression (50) qui y est raccordé ou via un paramètre de fonctionnement consultable dans un bus de données ainsi que comparée à une pression maximale (p_{V_max}) prédéfinie, dans lequel, lorsque la pression d'alimentation (p_{V_ist}) dépasse la pression maximale (p_{V_max}) (p_{V_ist} > p_{V_max}), la pression d'alimentation (p_{V_ist}) est alors abaissée par l'évacuation d'air comprimé via l'agencement de valves (34, 34', 44) du cylindre d'accouplement et réglée ou régulée sur la pression maximale (p_{V_max}) ou sur une pression d'alimentation de consigne (p_{V_soll}) qui se situe sous la pression maximale (p_{V_max}) pour une différence de pression (Δp_{V}) fixée au préalable (p_{V_soll} - p_{V_max} ; (p_{V_soll} - p_{V_max} -Δp_{V}), en ce que la baisse de pression éventuellement nécessaire se produit directement avant et pendant des opérations de commutation au moyen de l'agencement de valves (34, 34', 44) qui n'est pas prévu pour actionner le frein de transmission pendant l'opération de commutation respective, **caractérisé en ce que** lors d'une mise en œuvre de l'agencement de valves (34, 34', 44) concerné avec uniquement une valve d'admission (36, 38) et uniquement une valve d'évacuation (40, 42), qui sont conçues en tant que valves à impulsions et présentent les mêmes largeurs nominales, la valve d'évacuation (40, 42) est ouverte avec une impulsion en largeur plus grande que celle de la valve d'admission (36, 38), pour abaisser la pression.

2. Procédé selon la revendication 1, **caractérisé en ce que** la différence de pression (Δp_{V}) pour la pression maximale (p_{V_max}) se situe entre 0,5 × 10⁵ Pa et 1,0 × 10⁵ Pa.
